# EUROPEAN PATENT SPECIFICATION

(11) **EP 1 878 945 B1**
(45) Date of publication and mention of the grant of the patent: **27.04.2011**
(21) Application number: 07017116.0
(22) Date of filing: 14.08.2002
(51) Int. Cl.: F16H 3/083, F16H 3/04, F16H 63/30, F16D 19/00, F16D 13/16

(54) **Transmission unit with stepped change of gear ratio**
Getriebe mit schrittweiser Änderung der Getriebeübersetzung
Unité de transmission avec changement étagés de rapport de transmission

(30) Priority: 20.08.2001 PL 34920901
(43) Date of publication of application: 16.01.2008
(62) Divisional of application: 02763140.7
(73) Proprietor: Pawelec, Slawomir, 02 798 Warszawa (PL)
(72) Inventor: Pawelec, Slawomir, 02 798 Warszawa (PL)

(56) References cited:
- DE-A1- 1 500 390
- DE-A1- 19 512 642
- GB-A- 1 308 515
- US-A- 1 337 578
- US-A- 3 067 626
- US-A- 4 088 037
- US-A- 5 029 689

## Description

The invention solves the problem of the power transmission with simultaneous and stepped change of gear ratio, not interrupted by decoupling needed for synchronisation of rotations between input and output shafts. The invention solves another problem of providing the transmission system with effective, quickly and simply operating clutching mechanism. The invention solves also another problem of providing the power transmission with minimum of shafts and gears involved. The invention solves still another problem of providing bidirectional transmission system with interchangeable input and output of mechanical power.

The above problems have been addressed in several inventions. Polish patent PL 139304 discloses a gear system with two parallel shafts, bevel gears and conical gears placed alternatively on the shafts. The gear system includes also an intermediate shaft placed between these two shafts, with the racks and a roll displaced vertically. The change of gear ratio is obtained by displacing driving shaft and by linking of corresponding racks. The rolls and conical members placed on the shafts are cooperating by friction and the friction gear is used to compensate the rotations of the linking racks.

Another Polish patent PL 159560 B1 discloses a variable gear constructed similarly to planetary gear. The variable gear may transfer high torque and it automatically readjusts its rotations if the conditions of work, e.g. load, are changed. The variable gear has the slip clutch mounted on the driving shaft and connected by the racks to the driving wheel of planetary gear. It involves rotation of planetary gear around central wheel. In consequence the driving shaft receives additional rotation as a sum of rotations of internally toothed gear-wheel and of the wheel driving planetary gear.

American patent US 4,088,037 discloses a gear-box according to the preamble of claim 1, with a shift mechanism which incorporates both a combined synchronising clutch and a positive engagement system for coupling and decoupling gear elements. In this invention three shafts cooperate during the process of transmission of power, namely one input shaft, one intermediate shaft and one output shaft. One gear-wheel is rigidly secured to the input shaft and it is meshed with first gear-wheel of the gear cluster secured in rigid constraint to the intermediate shaft. The gear-wheels clustered on the intermediate shaft are meshed with corresponding free gear-wheels coaxial with the output shaft. When engaged by the clutch and synchronising mechanisms, selected free gear-wheel is coupled to the output shaft and is involved in power transmission. At given position of the clutch the other free gear-wheels are not involved in the transmission. Three shafts described above in general case are physically separated and generally they may rotate with different rotational speeds. They even may be not coplanar, however still they shall be parallel. The length of the intermediate shaft is limited by the walls of the gear-box and it is not even suggested in the description that this shaft may serve for the input or the output. Also an alternative in the direction of power transmission is not suggested in the patent description.

The gear-box described above comprises a positive clutch that requires synchronisation of rotations of coupled gear wheels with driven (output) shaft. This appliance may still be simplified by reduction of excessive shaft and this is a subject of the invention.

Another American patent US 1,337,378 discloses variable speed transmission mechanism arranged to permit the operator to quickly and easily change from one speed to another, which was attained with external clutch sliding along cylindrical surface of a drum provided with the teeth shaped on inner surface of cylindrical wall of the transmission mechanism. A large number of different speeds are provided thus permitting a gradual instead of an abrupt change from high speed to low speed or vice versa thereby rendering it possible for the engine to maintain a constant speed. Also a reversing mechanism having a similar large number of graded gear mechanisms is provided.

Although the transmission mechanism presented in US 1,337,378 offers a solution to the problem of the clutch positioning outside the gear-wheels, i.e. contrary to US 4,088,037 where the clutch is closed inside the gear-wheels, resulting construction is much complicated and vulnerable in particular to high torques. One of the problems that shall be solved to make this kind of solution practically applicable is to eliminate a multi-planetary multi-shaft system based on the idle gears. Therefore main goal of the construction simplification, as defined beforehand, is the main aim of this invention.

The transmission unit according to the invention provides for stepped change of ratio and generally continuous transmission of power by two parallel shafts provided with two sets of gear-wheels, with one set of gear-wheels (gear cluster) secured to one shaft in rigid constraint and permanently meshed with another set of free gear-wheels actuated by integrated shift and clutch mechanism sliding along another shaft, where first shaft is rotating together with coaxial set (cluster) of gear-wheels permanently meshed with corresponding free gear-wheels coaxial with second shaft, and where selected free gear-wheel is actuated and/or de-actuated by slipping (non-positive) clutch movable along the axis of second shaft.

Both shafts may serve for an input and an output of proposed gear-box. The choice between direct and reversed embodiments depends on specific tasks in practical application of the invention and on mechanical conditions of operation of the gear-box.

In primary embodiment the transmission unit providing for stepped change of ratio and generally continuous transmission of power comprises two parallel shafts, called first shaft and second shaft. When first shaft serves for the input, second shaft is the output of torque. Alternatively, when second shaft is the input, then first shaft is the input of torque. First shaft is rotating together with coaxial set of gear-wheels, secured to this shaft axially in rigid constraint and permanently meshed with corresponding free gear-wheels coaxial with second shaft. Besides, selected free gear-wheel is actuated and/or de-actuated by the clutch movable along the axis of second shaft.

In strongly suggested embodiment the clutch is integrated with the shift mechanism.

In one embodiment free gear-wheels have the teeth on outer surfaces and the clutch is movable inside coaxial cylindrical bores of free gear-wheels, but in another embodiment free gear-wheels have teeth on inner surfaces of coaxial cylindrical bores and the clutch is movable outside free gear-wheels along their outer surfaces.

In one embodiment the clutch acts upon corresponding surface of free gear-wheel, inner or outer, with a force perpendicular to the axis of the shaft. Also in preferred embodiment the clutch actuates and/or de-actuates selected free gear-wheel with corresponding surface by friction.

With the transmission unit according to the invention the time required for a change of gear ratio when the torque is not transmitted from the input to the output of the gear-box is shortened. The number of operations in the actuation/de-actuation cycle is reduced by elimination of the step of synchronisation. As a matter of fact all pairs of cooperating gears are permanently synchronised due to permanent mesh of corresponding gears. The gear-box according to the invention is compact and may transmit torques of high values.

The invention in preferred embodiments is schematically shown in an elevation view on Fig.1-Fig.4.
Fig.1 shows the transmission unit with the shift and clutch mechanism placed on output shaft inside free gear-wheels. The clutch is in "on" state and actuates selected free gear-wheel. In "on" state the clutch is locked and may not be moved along the shaft.
Fig.2 shows alternative implementation of the embodiment shown in Fig. 1, where the transmission unit has the shift and clutch mechanism placed on input shaft inside free gear-wheels. The clutch is in "off" state and de-actuates selected free gear-wheel. In "off" state the clutch may be moved along the shaft.
Fig.3 shows another embodiment of the transmission unit with the shift and clutch mechanism placed on output shaft outside free gear-wheels. The clutch is in "on" state and actuates selected free gear-wheel.
Fig.4 shows alternative implementation of the embodiment shown in Fig. 3, where the transmission unit has the shift and clutch mechanism placed on input shaft outside free gear-wheels. The clutch is in "off" state and deactuates selected free gear-wheel.

In preferred embodiment of the invention, the transmission unit providing for stepped change of ratio and generally continuous transmission of power includes two parallel shafts and two sets of gear-wheels: one set of gear-wheels is secured to one shaft in rigid constraint and is permanently meshed with another set of free gear-wheels actuated by integrated shift and clutch mechanisms sliding along this shaft. More precisely, first shaft (9, 19) is rotating together with coaxial set of gear-wheels (10, 20), permanently meshed with corresponding free gear-wheels (11, 21) coaxial with second shaft (8, 18), and selected free gear-wheel is actuated and/or de-actuated by the clutch (14, 24) movable along the axis of second shaft (8, 18). Obviously the sum of radii of cooperating pairs of meshed gears is constant in given embodiment.

Actuation of selected gear is realised with a slipping clutch (14, 24).

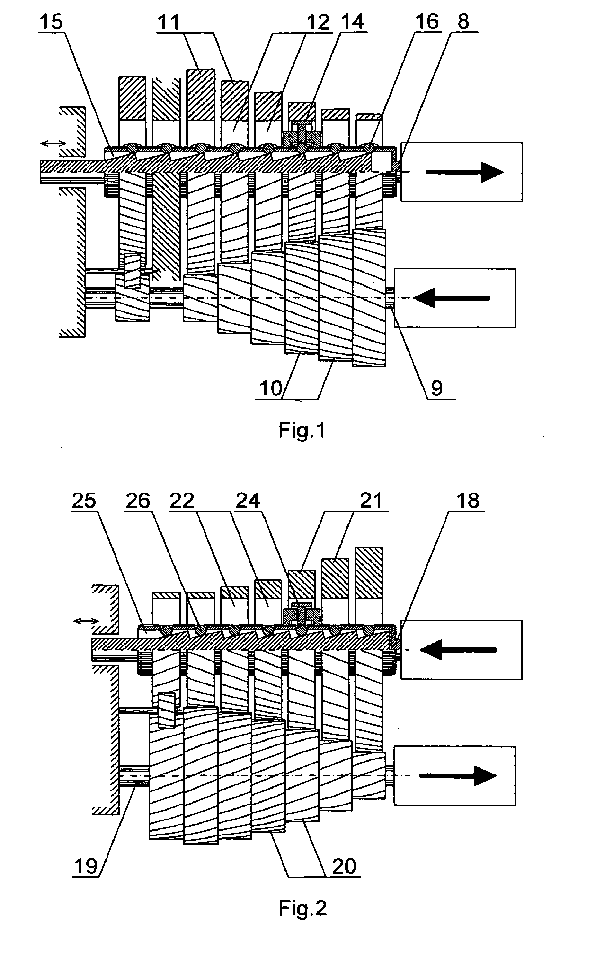

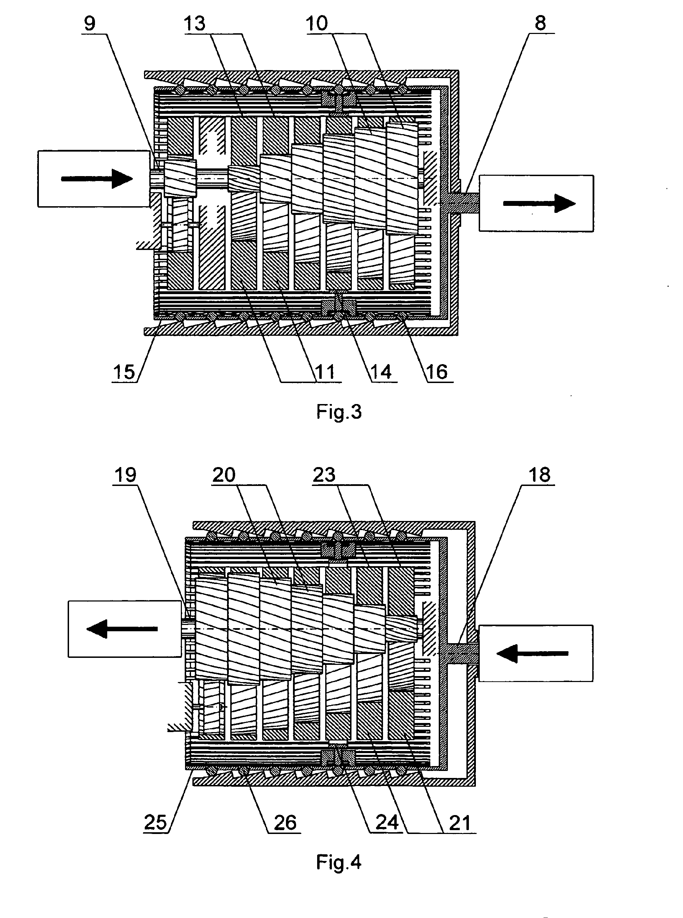

Both shafts may serve for the input and the output of the gear-box. Namely, in one of preferred embodiments (Fig.1 and Fig.3) first shaft (9) is the input shaft, and second shaft (8) is the output shaft. In another of preferred embodiments (Fig.2 and Fig.4) first shaft (19) is the output shaft, and second shaft (18) is the input shaft.

The clutch (14, 24) may slide along the axis of the shaft internally or externally, i.e. inside or outside of free gear-wheels (11, 21). In first case (Fig.1 and Fig.2) free gear-wheels (11, 21) have the teeth on outer surfaces and the clutch (14, 24) is movable inside coaxial cylindrical bores (12, 22) of free gear-wheels (11, 21). The clutch (14, 24) actuates and /or de-actuates selected free gear-wheel while cooperating with inner cylindrical surface of the bore. The bores are of approximately the same radius. In alternative case (Fig.3 and Fig.4) free gear-wheels (11, 21) have the teeth on inner surfaces of coaxial cylindrical bores and the clutch (14, 24) is movable outside free gear-wheels (11, 21) along their outer surfaces (13, 23). To make the clutch (14, 24) cooperate with these surfaces, they are cylindrical with approximately the same radius. It shall be noted that in first case free gear-wheels (11, 21) have the same inner radius of the cylindrical bores, and different outer radii of toothed surfaces. On the contrary, in alternative case outer radius is the same for all free gear-wheels (11, 21) while the inner radii are different. It shall also be noted that in first case the shaft (8, 18) is placed inside the set of free gear-wheels (11, 21), while in alternative case the shaft (8, 18) is placed outside the set of free gear-wheels (11, 21). The shaft (8, 18) may for example be a hollow cylinder and may contain all rotating parts of the gear-box inside.

The clutch (14, 24) acts upon corresponding surface (12, 22, 13, 23) with a force perpendicular to the axis of the shaft (8, 18). This solution prevents the gears from axial part of the reaction force which may be a factor destabilising the shift and clutch mechanism and the gears.

Preferably the clutch (14, 24) actuates and/or de-actuates selected free gear-wheel (11, 21) with corresponding surface (12, 22, 13, 23) by frictional engagement.

## Claims

1. A transmission unit providing for stepped change of ratio and generally continuous transmission of power comprising two parallel shafts (8, 9, 18, 19): first shaft (9, 19) and second shaft (8, 18), and where first shaft (9, 19) is rotating together with coaxial set of gear-wheels (10, 20), secured to this shaft axially in rigid constraint and permanently meshed with corresponding free gear-wheels (11, 21) coaxial with second shaft (8, 18), and where selected free gear-wheel is actuated and/or de-actuated by the clutch (14, 24) movable along the axis of second shaft (8, 18) **characterised in that** the clutch (14, 24) is a slipping clutch, and **in that** first shaft (9, 19) serves for an input or an output of torque, while second shaft (8, 18) serves for the output or the input of torque accordingly.

2. The transmission unit **according to claim 1** where the clutch (14, 24) is integrated with the shift mechanism.

3. The transmission unit **according to claim 1** or 2 where free gear-wheels (11, 21) have the teeth on outer surfaces and the clutch (14, 24) is movable inside coaxial cylindrical bores (12, 22) of free gear-wheels (11, 21).

4. The transmission unit **according to claim 1 or 2** where free gear-wheels (11, 21) have the teeth on inner surfaces of coaxial cylindrical bores and the clutch (14, 24) is movable outside free gear-wheels (11, 21) along their outer surfaces (13, 23).

5. The transmission unit **according to claims 1 to 4** where the clutch (14, 24) acts upon corresponding surface (12, 22, 13, 23) with a force perpendicular to the axis of second shaft (8, 18).

6. The transmission unit **according to claim 5** where the clutch (14, 24) actuates and/or de-actuates selected free gear-wheel (11, 21) with corresponding surface (12, 22, 13, 23) by friction.

## Patentansprüche

1. Sendeeinheit, die eine Sprungitbersetzung der Schaltung und eine allgemeine, kontinuierliche Kraftübertragung bietet und die zwei parallele Wellen beinhaltet (8, 9, 18, 19): eine erste Welle (9, 19) und eine zweite Welle (8, 18), wobei die erste Welle (9, 19) sich mit einem Satz von koaxialen Zahnrädern dreht (10, 20), die Stoffschlüssig mit dieser Welle verbunden und mit entsprechenden freien Zahnrädern ständig verzahnt sind (11, 21), die koaxial mit der zweiten Welle (8, 18) sind, wobei das gewählte Zahnrad mit einer Kupplung (14, 24) an- und/oder abgeschaltet wird, und beweglich entlang der Achse der zweiten Welle (8, 18) ist, **dadurch gekennzeichnet, dass** die Kupplung (14, 24) eine Rutschkupplung ist und dass die erste Welle (9, 19) den Eingang oder Ausgang für den Drehmoment bildet, während die zweite Welle (8, 18) entsprechend den Ausgang oder Eingang für den Drehmoment bildet.

2. Sendeeinheit nach Anspruch 1 **gekennzeichnet dadurch, dass** die Kupplung (14, 24) mit dem Schiebemechanismus integriert ist.

3. Sendeeinheit nach Anspruch 1 oder 2 **gekennzeichnet dadurch, dass** die freien Zahnräder (11, 21) an den Außenflächen gezahnt sind, und die Kupplung (14, 24) innerhalb koaxialer zylinderförmiger Öffnungen (12, 22) beweglich ist in den freien Zahnrädern (11, 21).

4. Sendeeinheit nach Anspruch 1 oder 2 **gekennzeichnet dadurch, dass** die freien Zahnräder (11, 21) an den Innenflächen koaxialer zylinderförmiger Öffnungen gezahnt sind, und die Kupplung (14, 24) außerhalb der freien Zahnräder (11, 21) beweglich ist, entlang deren Außenflächen (13, 23).

5. Sendeeinheit nach Anspruch 1 bis 4 **gekennzeichnet dadurch, dass** die Kupplung (14, 24) auf eine entsprechende Flächen wirkt (12, 22, 13, 23) mit einer Kraft senkrecht zur Achse der Zweiten welle (8, 18).

6. Sendeeinheit nach Anspruch 1 bis 5 **gekennzeichnet dadurch, dass** die Kupplung (14, 24) das gewählte freie Zahnrad (11, 21) an- und/oder abschaltet mit der entsprechenden Fläche (12, 22, 13, 23), durch Reibung.

## Revendications

1. L'unité de transmission assurante le changement graduel du rapport et la transmission continue de la puissance comprenant deux arbres parallèles (8, 9, 18, 19): le premier arbre (9, 19) et le deuxième arbre (8, 18), et où le premier arbre (9, 19) se retourne avec coaxial assemblage des roues dentées (10, 20), fixées à cet arbre axialement en liaisons rigides et constamment s'engrené avec correspondantes roues dentées libres (11, 21) coaxial avec le deuxième arbre (8, 18), et où choisi roue dentée libre est embrayée et/ou débrayée par l'accouplement (14, 24) mouvable le long de l'axe du deuxième arbre (8, 18) **caractérisée en ce que** l'accouplement (14, 24) c'est l'accouplement à glissement, et **en ce que** le premier arbre (9, 19) sert de l'entré ou le sortie, pendant que le deuxième arbre (8, 18) sert du sortie ou l'entré du couple, relativement.

2. L'unité de transmission selon la revendication 1, **caractérisée en ce que** l'accouplement (14, 24) est integré avec le mechanisme de glissement.

3. L'unité de transmission selon la revendication 1 ou 2, **caractérisée en ce que** les roues dentées libres (11, 21) ont les dents on surfaces externes et l'accouplement (14, 24) est movable dans coaxial cylindriques évidements (12, 22) des roues dentées libres (11, 21).

4. L'unité de transmission selon la revendication 1 ou 2, **caractérisée en ce que** les roues dentées libres (11, 21) ont les dents on surfaces internes des coaxial cylindriques évidements et l'accouplement (14, 24) est movable dehors des roues dentées libres (11, 21) le long de leurs surfaces externes (13, 23).

5. L'unité de transmission selon la revendication 1 à 4, **caractérisée en ce que** l'accouplement (14, 24) agisse sur correspondante surface (12, 22, 13, 23) avec une force perpendiculaire à l'axe du deuxième arbre (8, 18).

6. L'unité de transmission selon la revendication 5, **caractérisée en ce que** l'accouplement (14, 24) embraye et/ou débraye choisi roue dentée libre (11, 21) avec correspondante surface (12, 22, 13, 23) par friction.
